# EUROPEAN PATENT APPLICATION

(11) **EP 4 779 427 A1**
(43) Date of publication of application: **22.07.2026**
(21) Application number: 24871542.7
(22) Date of filing: 09.08.2024
(51) Int. Cl.: G05D 1/43, B65G 1/00

(54) **ARTICLE TRANSPORT FACILITY**

(30) Priority: 27.09.2023 JP 2023166386
(71) Applicant: Daifuku Co., Ltd., Osaka-shi, Osaka 555-0012 (JP)
(72) Inventor: KIMURA Kazunari, Gamo-gun, Shiga 529-1692 (JP); KAMIKAWA Yuji, Gamo-gun, Shiga 529-1692 (JP)
(74) Representative: Grosse, Felix Christopher
(86) International application number: PCT/JP2024/028650
(87) International publication number: WO 2025/069740

(57) **Abstract**

A transport vehicle includes a vehicle-side control section (14) that controls operation of each section of the transport vehicle and a detection section that detects detectable objects, and is configured to sequentially detect a plurality of the detectable objects with the detection section while moving along a movement route. A management device (Ct) selectively causes the vehicle-side control section (14) to execute a normal mode and an inspection mode. In the inspection mode, the vehicle-side control section (14), every time a detectable object is detected by the detection section, transmits identification information (I4) of the detectable object detected by the detection section and detection level information (IL) indicating a detection level of the detectable object by the detection section to the management device (Ct).

## Description

### Technical Field

The present invention relates to an article transport facility including a transport vehicle that transports an article, a management device that is communicably connected to the transport vehicle and controls the transport vehicle, and a plurality of detectable objects that are each provided with unique identification information.

### Background Art

An example of such an article transport facility is disclosed in JP 7076935 (Patent Document 1). Reference signs shown in parentheses in the description of the background art below are from Patent Document 1.

In the facility disclosed in Patent Document 1, a plurality of marks (9) are interspersed on the floor surface. Each mark (9) is identifiable by a transport vehicle (4). An overall control computer (5) instructs the transport vehicle (4) as to a plurality of marks (9) that the transport vehicle (4) is to follow. The transport vehicle (4) sequentially detects the marks (9) with a mark sensor (48) while traveling. That is, the marks (9) constitute part of the movement route of the transport vehicle (4) and function to support travel of the transport vehicle (4).

### Prior Art Documents

### Patent Documents

Patent Document 1: JP 7076935

### Disclosure of the Invention

### Problem to be Solved by the Invention

As with the marks (9) in Patent Document 1, detectable objects that are detected by a transport vehicle during travel may need to be replaced or repaired due to being grimy, damaged, or the like. High levels of grime or damage can impair the function of the detectable objects to support the travel of the transport vehicle along the movement route. In such a case, the transport vehicle will no longer be able to travel appropriately along the movement route. In this way, detectable objects such as the marks (9) in Patent Document 1 tend to affect the travel environment of the transport vehicle.

In view of the above situation, it is desired to realize an article transport facility that facilitates maintenance of an environment in which the transport vehicle is able to travel appropriately.

### Means for Solving Problem

An article transport facility including:
a transport vehicle configured to transport an article;
a management device communicably connected to the transport vehicle and configured to control the transport vehicle; and
a plurality of detectable objects each provided with unique identification information,
the transport vehicle:
   (i) being configured to travel along a movement route set by linking together a plurality of the detectable objects,
   (ii) including:
      a vehicle-side control section configured to perform operation control of each section included in the transport vehicle; and
      a detection section configured to detect the detectable objects,
   (iii) being configured to sequentially detect the detectable objects with use of the detection section while moving along the movement route,
the management device being configured to selectively cause the vehicle-side control section to execute a normal mode and an inspection mode,
the vehicle-side control section being configured to:
   in the normal mode, every time one of the detectable objects is detected by the detection section, transmit, to the management device, (i) the identification information of the detectable object detected by the detection section and (ii) positional relationship information indicating a relative positional relationship between the detectable object and a reference position of the transport vehicle at a time that the identification information is detected by the detection section, and
   in the inspection mode, every time one of the detectable objects is detected by the detection section, transmit, to the management device, (i) the identification information of the detectable object detected by the detection section and (ii) detection level information indicating a detection level of the detectable object by the detection section.

According to this configuration, in the normal mode, the management device is able to grasp the identification information and the positional relationship information for each of the detectable objects constituting the movement route of the transport vehicle, thus facilitating optimization of control of the transport vehicle. Also, in the inspection mode, the management device is able to acquire detection level information for each detectable object, in addition to the identification information. If the detection level indicated by the detection level information is high, the detectable object can be determined to be in good condition. On the other hand, if the detection level indicated by the detection level information is low, it can be assumed that there is a high necessity to replace or repair the detectable object. Thus, it is easier to take measures, such as replacing or repairing the detectable object, before the detectable object deteriorates and becomes unsuitable for use. As described above, according to this configuration, maintenance of an environment in which a transport vehicle can travel appropriately is facilitated.

Further features and advantages of the technology according to the present disclosure will become apparent from the following description of exemplary and non-limiting embodiments with reference to the drawings.

### Brief Description of the Drawings

FIG. 1 is a plan view of an article transport facility.
FIG. 2 is a front view of a transport vehicle.
FIG. 3 is a control block diagram.
FIG. 4 is a diagram showing map data.
FIG. 5 is a diagram showing the configuration of a detectable object.
FIG. 6 is a diagram showing a relative positional relationship between a detectable object and a reference position of a transport vehicle at the time that identification information is detected.
FIG. 7 is a diagram showing transmission content from a transport vehicle to a management device in both a normal mode and an inspection mode.
FIG. 8 is a diagram showing an example of a display section of a terminal device.

### Best Mode for Carrying out the Invention

Hereinafter, embodiments of an article transport facility will be described with reference to the drawings.

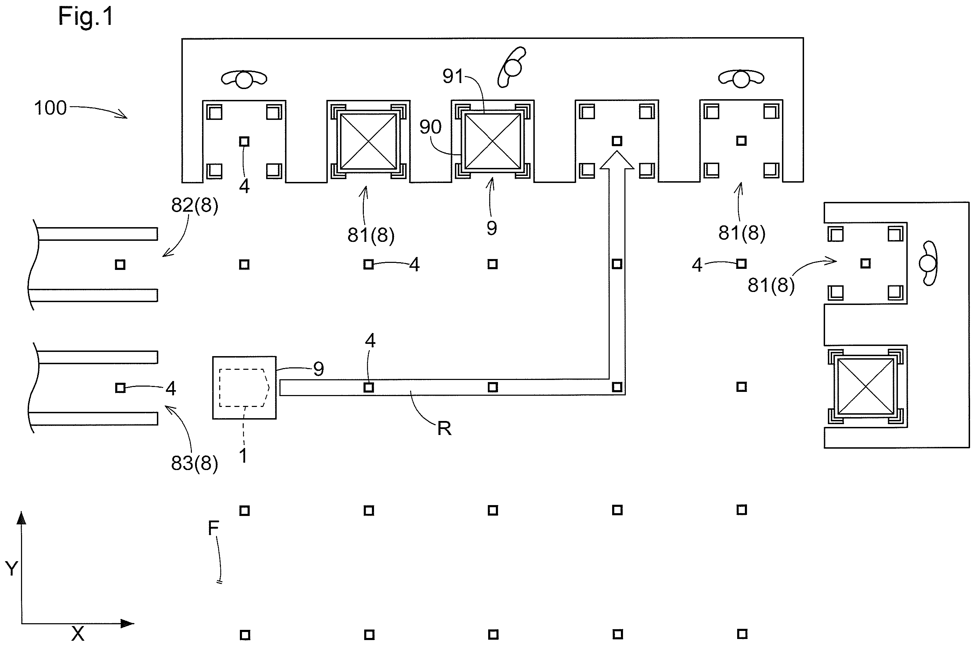

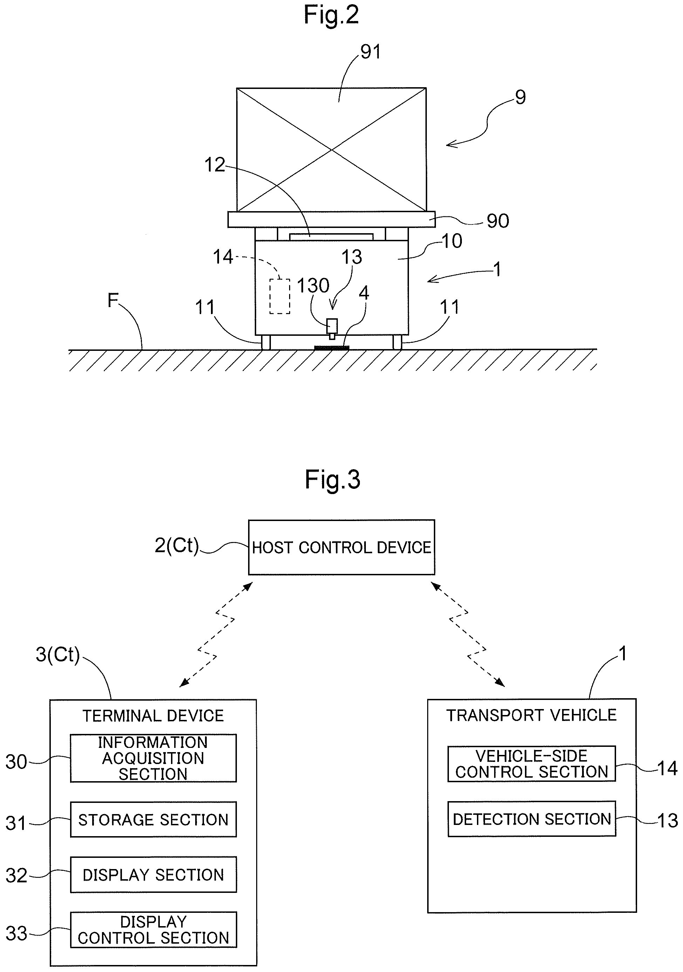

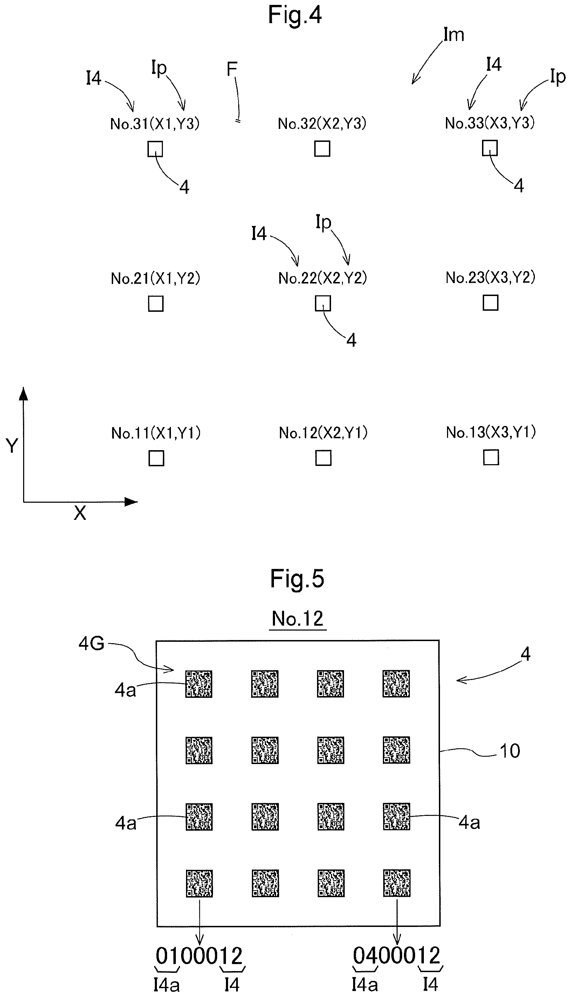

As shown in FIG. 1, an article transport facility 100 includes a transport vehicle 1 that transports articles 9, a management device Ct (see FIG. 3) that is communicably connected to the transport vehicle 1 and controls the transport vehicle 1, and a plurality of detectable objects 4 that are each provided with unique identification information I4 (see FIG. 4). As will be described in detail later, in the present embodiment, the management device Ct includes a host control device 2 and a terminal device 3.

In the present embodiment, the transport vehicle 1 travels along a travel surface F that extends in an X direction, which is a predetermined direction, and a Y direction orthogonal to the X direction. The travel surface F is formed on a floor of the article transport facility 100. The transport vehicle 1 travels on the travel surface F in the X or Y direction and transfers the articles 9 to and from transfer target points 8. In the present example, the transport vehicle 1 is constituted as a floor transport vehicle that travels on the floor surface.

The transport vehicle 1 travels along a movement route R that is set by linking together a plurality of the detectable objects 4. In the present embodiment, the detectable objects 4 are distributed at a plurality of locations on the travel surface F. The movement route R is set by selecting an unspecified number of detectable objects 4 from the plurality of detectable objects 4 and linking together the selected detectable objects 4. The interval between detectable objects 4 adjacent to each other is a set interval determined in advance. For example, the transport vehicle 1, having detected a specific detectable object 4, travels the set interval toward the next detectable object 4 and detects the next detectable object 4. The transport vehicle 1 travels to the destination by repeating this process. In the present example, the detectable objects 4 are disposed equidistantly in a partial area or the entire area of the travel surface F.

In the present embodiment, the movement route R of the transport vehicle 1 is set by combining a plurality of detectable objects 4 continuously disposed in the X direction and a plurality of detectable objects 4 continuously disposed in the Y direction. In other words, the movement route R of the transport vehicle 1 is constituted by combining a route extending in the X direction with a route extending in the Y direction.

For example, FIG. 1 shows the movement route R in the case where the transport vehicle 1, having received an article 9 at a staging section 83, transports the article 9 to one of a plurality of housing sections 81. In the present embodiment, the host control device 2 (see FIG. 3) sets the movement route R of the transport vehicle 1. The host control device 2 sets a movement route R from the transport source to the transport destination of the article 9 for each transport vehicle 1.

In the present embodiment, the articles 9 include pallets 90 and one or more loads 91 placed on the pallets 90. In the present example, the transport vehicle 1 transports a pallet 90 with one or more loads 91 placed thereon, or an empty pallet 90 without a load 91 placed thereon. The transfer target points 8 are configured for the pallets 90 to be placed directly thereon.

In the present embodiment, the article transport facility 100 includes the housing sections 81 that temporarily house the articles 9, an automated warehouse (not shown) that stores the articles 9, a warehousing section 82 for moving the articles 9 into the automated warehouse, and the staging section 83 for moving the articles 9 out of the automated warehouse. For example, the housing sections 81 are adjacent to a work area. In the work area, the articles 9 housed in the housing sections 81 are handled by a worker or a robot. For example, tasks such as picking and packing can be performed in the work area.

At least part of each of the housing sections 81, the warehousing section 82, and the staging section 83 is constituted as a transfer target point 8. The transport vehicle 1 transfers articles 9 to and from these transfer target points 8.

As shown in FIG. 2, the transport vehicle 1 includes a body 10, a plurality of wheels 11, and a transfer section 12 that transfers the articles 9 to and from the transfer target points 8. In the present example, the plurality of wheels 11 include at least a pair of wheels 11 spaced apart from each other in the width direction. The pair of wheels 11 are each independently driven by separate motors or the like. By driving the pair of wheels 11 to rotate in opposite directions to each other, the transport vehicle 1 can turn on the spot around a vertical axis. The transport vehicle 1 changes the travel direction to the X or Y direction by turning.

The transport vehicle 1 includes a vehicle-side control section 14 that controls operation of the various sections of the transport vehicle 1, and a detection section 13 that detects the detectable objects 4, and is configured to sequentially detect a plurality of the detectable objects 4 with the detection section 13 while moving along the movement route R.

In the present embodiment, the detection section 13 includes an image capturing section 130 that captures images of the detectable objects 4. The detection section 13 acquires various information relating to a detectable object 4 whose image is captured by the image capturing section 130, based on a recognition result of the image.

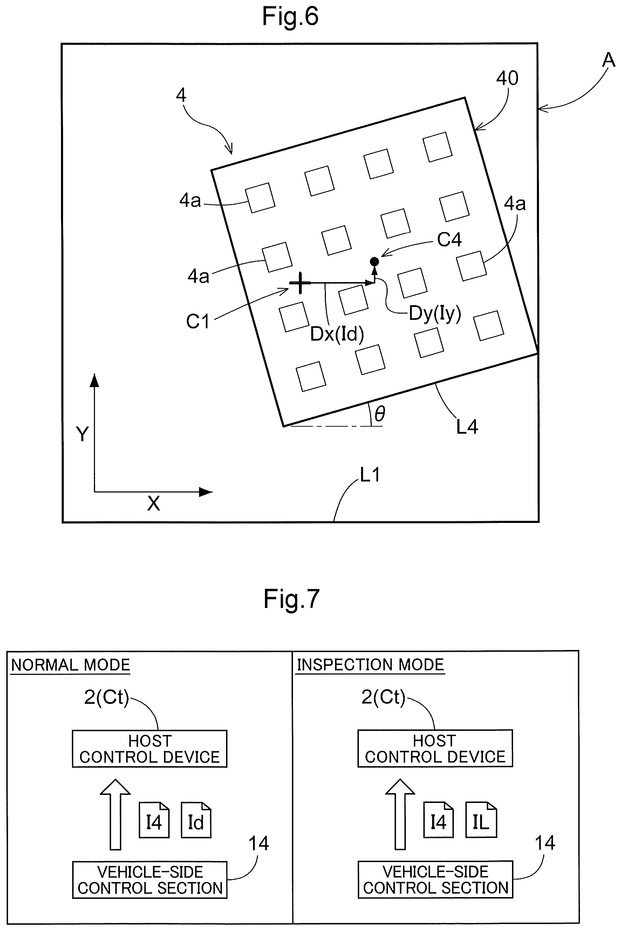

The image capturing section 130 faces the travel surface F and captures images of the travel surface F. In the present embodiment, the image capturing section 130 continuously captures images of the travel surface F in a preset cycle. This cycle is determined as appropriate according to the performance of the transport vehicle 1 or the like. An infinitely short cycle can also be set, such that the image capturing section 130 constantly captures images of the travel surface F. A detectable object 4 is detected in response to the detectable object 4 coming within an image capturing range A that is based on the angle of view of the image capturing section 130, while the transport vehicle 1 is traveling, for example (see FIG. 6).

FIG. 3 shows a control block diagram of the article transport facility 100.

As shown in FIG. 3, the article transport facility 100 includes the host control device 2 and the transport vehicle 1. The host control device 2 and the transport vehicle 1 can communicate with each other. For example, the host control device 2 transmits a transport command designating the transport source and the transport destination of an article 9 to the transport vehicle 1. The transport vehicle 1 performs exchanges with the host control device 2, such as responding to commands from the host control device 2 and transmitting its current position to the host control device 2. The transport vehicle 1 performs such exchanges (transmission and reception of signals) with the host control device 2, using the vehicle-side control section 14 installed therein.

The host control device 2 and the vehicle-side control section 14 each include a processor such as a microcomputer, peripheral circuitry such as memory, and the like. Various processing or functions are realized through the above hardware cooperating with programs that are executed on a processor such as a computer.

In the present embodiment, the article transport facility 100 further includes the terminal device 3 communicably connected to the host control device 2. In the present example, the host control device 2 and the terminal device 3 are communicably connected in a wireless manner. The host control device 2 and the terminal device 3 are included in the management device Ct. The terminal device 3 is operated by an operator. For example, the operator is able to input commands to the transport vehicle 1 by operating the terminal device 3. Commands input by the operator are indirectly transmitted to the transport vehicle 1 via the host control device 2. The present disclosure is, however, not limited to such a configuration, and the terminal device 3 may be communicably connected to the transport vehicle 1, and commands may be transmitted directly from the terminal device 3 to the transport vehicle 1.

The terminal device 3 includes an information acquisition section 30, a storage section 31 that stores information, a display section 32 that displays information, and a display control section 33. For example, terminal device 3 is constituted using a personal computer, a tablet, a smartphone, or the like.

As shown in FIG. 4, the host control device 2 is provided with map information Im showing a map of a movable area in which the transport vehicle 1 can move as map data. Alternatively, the host control device 2 can acquire map data from a database held in a server (including a cloud server).

FIG. 4 shows an image of map data. The map information Im visualizes a map and includes at least information of the travel surface F and the detectable objects 4.

Position information Ip indicating the position of each of the detectable objects 4 on the map and the identification information I4 of each of the detectable objects 4 are respectively associated with each other and reflected in the map information Im as map data.

The position information Ip indicates the positions of the detectable objects 4, with the positions of the detectable objects 4 being indicated in an XY coordinate system (position in X direction and position in Y direction). The identification information I4 is unique information individually held by each detectable object 4. In the present example, the identification information I4 is a number given to each detectable object 4.

In the map data shown in FIG. 4, for example, a detectable object 4 whose identification information I4 is "No.11" is located at a position "X1, Y1" in the XY coordinate system. Also, for example, a detectable object 4 whose identification information I4 is "No.12" is located at a position "X2, Y1" in the XY coordinate system. In this way, the identification information I4 and the position information Ip for each detectable object 4 are shown in the map data.

The host control device 2 sets the movement route R of the transport vehicle 1 with reference to the map data. The transport vehicle 1 sequentially detects the detectable objects 4 constituting the movement route R while moving.

As shown in FIG. 5, in the present embodiment, each one of the detectable objects 4 has a mark group 4G, which is a set of marks 4a. The detectable object 4 includes a plate 40, and the mark group 4G is attached to the plate 40.

In the present embodiment, each of the marks 4a is a two-dimensional code that holds predetermined information. Each mark 4a holds multiple pieces of information. In the present example, all of the marks 4a belonging to the same mark group 4G hold the same identification information I4 as each other and hold different mark information I4a from each other.

FIG. 5 shows the detectable object 4 whose identification information I4 is "No.12". In the illustrated example, one of the marks 4a belonging to the mark group 4G of this detectable object 4 holds information "0100012" consisting of a multiple digit number. The last two digits "12" of this information represent "No.12", which is the identification information I4 of the detectable object 4 to which the mark 4a holding this information is attached. In FIG. 5, another of the marks 4a holds information "0400012", with the last two digits "12" of this information representing "No.12", which is the identification information I4 of the detectable object 4. In this way, each of the marks 4a belonging to the mark group 4G of a detectable object 4 holds the identification information I4 of that detectable object 4. Thus, the transport vehicle 1 is able to acquire the identification information I4 of a detectable object 4 by detecting at least one of the marks 4a belonging to the mark group 4G thereof. Furthermore, since the identification information I4 of the detectable objects 4 is associated with the position information Ip thereof (see FIG. 4), the transport vehicle 1 is also able to acquire the position information Ip of each detectable object 4.

Meanwhile, each of the marks 4a belonging to the mark group 4G has its own unique information. For example, with regard to the mark 4a holding the information "0100012", the first two digits "01" of this information represent the unique mark information I4a of this mark 4a. Also, with regard to the mark 4a holding the information "0400012", the first two digits "04" of this information represent the unique mark information I4a of this mark 4a. In this way, the marks 4a belonging to one mark group 4G each hold unique mark information I4a, and when these marks 4a are detected by the transport vehicle 1, the transport vehicle 1 recognizes these marks 4a as separate marks 4a. In other words, the detection section 13 of the transport vehicle 1 is able to detect the entire mark group 4G and to detect the individual marks 4a constituting the mark group 4G.

While traveling along the movement route R, the transport vehicle 1 corrects its own position relative to the detectable objects 4, based on the result of recognition of the images captured by the image capturing section 130.

FIG. 6 shows the image capturing range A based on the angle of view of the image capturing section 130. The identification information I4 of a detectable object 4 is detected in response to the detectable object 4 coming within the image capturing range A while the transport vehicle 1 is traveling. In the present embodiment, the transport vehicle 1 corrects its own position while traveling, based on positional relationship information Id indicating the relative positional relationship between the detectable object 4 and a reference position C1 of the transport vehicle 1 at the time that the identification information I4 is detected by the detection section 13 (hereinafter, simply referred to as "reference position C1 of transport vehicle 1").

In the present embodiment, the positional relationship information Id includes a relative distance in each of the X direction and the Y direction between the detectable object 4 and the reference position C1 of the transport vehicle 1 at the time that the identification information I4 is detected, and a relative angle around a Z direction axis orthogonal to both the X and Y directions between the transport vehicle 1 and the detectable object 4 at the time that the identification information I4 is detected.

As shown in FIG. 6, the positional relationship information Id includes a relative distance Dx in the X direction and a relative distance Dy in the Y direction between a center position C4 of the detectable object 4 and the reference position C1 of the transport vehicle 1. For example, the transport vehicle 1, when traveling in the Y direction, corrects its own position such that the relative distance Dx in the X direction (left-right direction relative to travel direction) is zero. In this case, the relative distance Dy in the Y direction is an element that constantly fluctuates with travel of the transport vehicle 1 and thus is not corrected. The relative distance Dy in the Y direction in this case is used by the transport vehicle 1 to recognize its own current position. On the other hand, the transport vehicle 1, when traveling in the X direction, corrects its own position such that the relative distance Dy in the Y direction (left-right direction relative to travel direction) is zero. In this case, the relative distance Dx in the X direction is an element that constantly fluctuates with travel of the transport vehicle 1 and thus is not corrected. The relative distance Dx in the X direction in this case is used by the transport vehicle 1 to recognize its own current position.

Also, the positional relationship information Id includes a relative angle θ around the Z direction axis between the transport vehicle 1 and the detectable object 4. For example, the relative angle θ around the Z direction axis is calculated by the angle formed by a line parallel to a reference line L1 of the transport vehicle 1 and a line parallel to a reference line L4 of the detectable object 4. In the illustrated example, the reference line L1 of the transport vehicle 1 is set as part of the outer edge of the image capturing range A, and the reference line L4 of the detectable object 4 is set as part of the outer edge of the rectangular plate 40 of the detectable object 4. The transport vehicle 1 corrects its own position while driving, such that the relative angle θ is zero.

The detection section 13, having detected a detectable object 4, acquires the identification information I4 and the positional relationship information Id relating to the detectable object 4. The detection section 13 then acquires detection level information IL (see FIG. 7) that indicates the detection level of the detectable object 4 at the time of detection. In the present embodiment, the detection section 13 acquires the identification information I4, the positional relationship information Id, and the detection level information IL, based on the result of recognition of an image of the detectable object 4 captured by the image capturing section 130.

As described above with reference to FIG. 5, in the present embodiment, each one of the detectable objects 4 includes a mark group 4G which is a set of marks 4a. In the present embodiment, the detection level of the detectable object 4 by the detection section 13 is an index that represents the number of marks 4a detected by the detection section 13 as a percentage of the total number of marks 4a belonging to the mark group 4G provided in the one detectable object 4. In the example shown in FIG. 5, one mark group 4G is constituted by 16 marks 4a. The detection level is represented based on the number of marks 4a that the detection section 13 detected out of the 16 marks 4a.

In the present embodiment, the detection level is divided into a plurality of stages. For example, the detection level is divided into three stages: high level, low level, and medium level, which is a level between the high level and the low level.

For example, if the detection level is the high level, it can be determined that the detection sensitivity of the detectable object 4 by the detection section 13 is good. In this case, it can be determined that replacement or repair of the detectable object 4 is not necessary at this time. If the number of marks 4a belonging to one mark group 4G is 16, for example, and the number detected by the detection section 13 is 10 to 16, the detection level is set to the high level.

If the detection level is medium, for example, it can be determined that the detection sensitivity of the detectable object 4 by the detection section 13 is not good. In this case, replacement or repair of detectable object 4 is not necessarily required, but replacement or repair is recommended. For example, if the number of marks 4a belonging to one mark group 4G is 16, and the number detected by the detection section 13 is 5 to 9, the detection level is considered to be the medium level.

If the detection level is low, for example, it can be determined that the detection sensitivity of the detectable object 4 by the detection section 13 is poor. In this case, it can be determined that the detected detectable object 4 needs replacing or repair. If the number of marks 4a belonging to one mark group 4G is 16 and the number detected by the detection section 13 is 0 to 4, for example, the detection level is considered to be the low level.

As shown in FIG. 7, the host control device 2 selectively causes the vehicle-side control section 14 to execute the normal mode and the inspection mode. That is, the host control device 2 causes the vehicle-side control section 14 to execute the normal mode or causes the vehicle-side control section 14 to execute the inspection mode. When the normal mode is executed, the transport vehicle 1 transports an article 9 in response to a command from the host control device 2. When the inspection mode is executed, the transport vehicle 1 performs inspection of the detectable object 4.

In the normal mode, every time the detection section 13 detects a detectable object 4, the vehicle-side control section 14 transmits, to the host control device 2, the identification information I4 of the detectable object 4 detected by the detection section 13 and the positional relationship information Id showing the relative positional relationship between the detectable object 4 and the reference position C1 of the transport vehicle 1 at the time that the identification information I4 is detected by the detection section 13.

The identification information I4 of a detectable object 4 is associated with the position information Ip of that detectable object 4. Thus, due to the transport vehicle 1 transmitting the identification information I4 of the detectable object 4 detected by the detection section 13 to the host control device 2, the host control device 2 is able to grasp the current position of the transport vehicle 1. Also, the host control device 2 is able to grasp the specific current position of the transport vehicle 1, based on the positional relationship information Id transmitted from the transport vehicle 1. Furthermore, for example, by accumulating the positional relationship information Id as data, it also becomes possible to use the data to analyze detectable objects 4 that are prone to deviating from the transport vehicle 1.

In the inspection mode, every time a detectable object 4 is detected by the detection section 13, the vehicle-side control section 14 transmits the identification information I4 of the detectable object 4 detected by the detection section 13 and the detection level information IL indicating the detection level of the detectable object 4 by the detection section 13 to the host control device 2.

If the detection level indicated by the detection level information IL is high, the condition of the detectable object 4 can be determined to be good. On the other hand, if the detection level indicated by the detection level information IL is low, it can be assumed that there is a high necessity to replace or repair the detectable object 4. Thus, it is easier to take measures, such as replacing or repairing the detectable object 4, before the detectable object 4 deteriorates and becomes unsuitable for use. As described above, in the present embodiment, the detection level is divided into a plurality of stages. Accordingly, it becomes possible to take appropriate measures, according to the stage of detection level.

In the present embodiment, the host control device 2 certifies the detectable object 4 whose detection level shown in the detection level information IL received from the vehicle-side control section 14 is at or below a predetermined threshold as a defective detectable object. As described above, in the present embodiment, the detection level is divided into three stages: high level, medium level, and low level. The host control device 2 certifies the detectable object 4 as a defective detectable object, when the detection level indicated by the detection level information IL received from the vehicle-side control section 14 is the low level. As shown in the present example, if the number of marks 4a detected by the detection section 13 is 0 to 4 out of the 16 marks 4a (see FIG. 5) of the detectable object 4, the detection level is determined to be the low level, and the detectable object 4 is certified as a defective detectable object. In other words, in the case of the embodiment, the preset threshold is "4", and a detectable object 4 with respect to which the number of marks 4a detected by the detection section 13 is "4" or less is certified as a defective detectable object.

For example, if a detectable object 4 is certified as a defective detectable object, the host control device 2 preferably notifies the terminal device 3 of the identification information I4 and the position information Ip of the detectable object 4 and information indicating that the detectable object 4 is a defective detectable object. A worker operating the terminal device 3 can thereby be prompted to replace or repair the defective detectable object.

In the present embodiment, the host control device 2 sets part or all of the movable area in which the transport vehicle 1 can move as an inspection area, and causes the vehicle-side control section 14 of the transport vehicle 1 that exists in the inspection area to execute the inspection mode.

If a part of the movable area is set as the inspection area, inspection of the detectable object 4 can be performed only in the inspection area, and the articles 9 can be transported in the area other than the inspection area.

The host control device 2 preferably sets all of the movable area as the inspection area when the article transport facility 100 is not in operation such as at night, for example. Inspection of the detectable object 4 can thereby be performed in all of the movable area of the transport vehicle, utilizing the state in which the article transport facility 100 is not operating.

In the present embodiment, the host control device 2 designates one or more or all of the transport vehicles 1 provided in the article transport facility 100, and causes the vehicle-side control section 14 of the designated transport vehicles 1 to execute the inspection mode. Designating a larger number of transport vehicles 1 enables inspection of the detectable objects 4 in the inspection area to be completed sooner. Designating a smaller number of transport vehicles 1 enables the number of transport vehicles 1 in charge of transporting articles 9 to be increased and a high utilization rate of the facility to be secured.

In the present embodiment, the maximum speed limit of the transport vehicles 1 in the inspection mode is set lower than the maximum speed limit of the transport vehicles in the normal mode. In the inspection mode, the transport vehicle 1 needs to acquire the detection level information IL for the detectable object 4, and when the movement speed of the transport vehicle 1 is too fast, appropriately acquiring the detection level information IL is difficult. In the case of the present embodiment, acquiring the detection level information IL for the detectable object 4 necessitates detecting the 16 marks 4a provided in the detectable object 4. Thus, when the speed of the transport vehicle 1 at the time of detection is too high, detecting all of these 16 marks 4a is difficult. For example, the maximum speed limit of the transport vehicle 1 in the inspection mode is preferably set to from 10% to 20% of the maximum speed limit of the transport vehicle 1 in the normal mode.

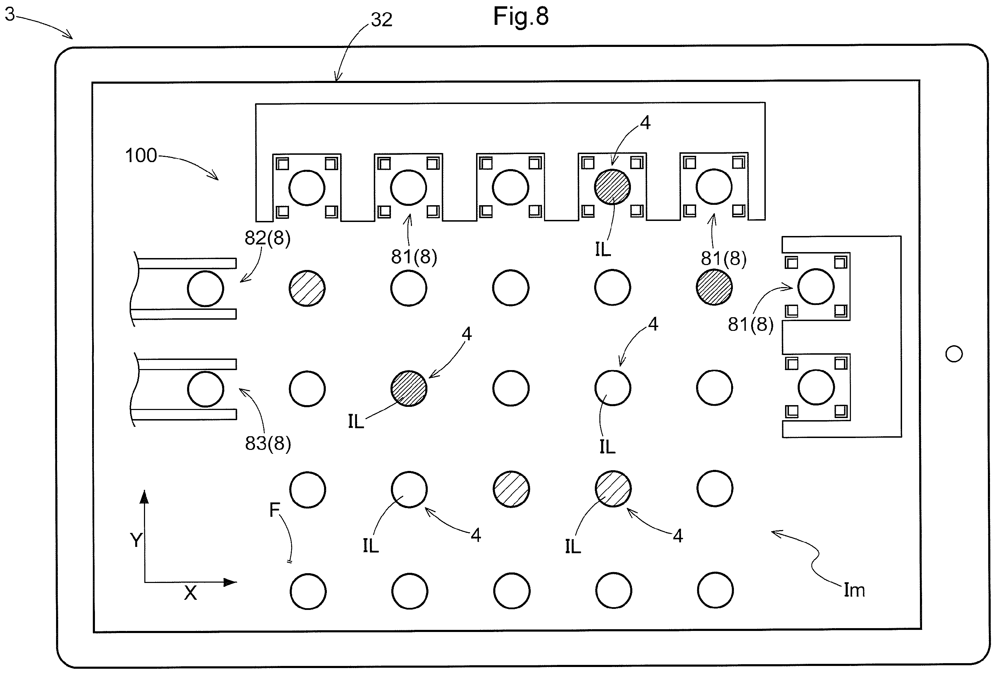

FIG. 8 shows an example of the terminal device 3. In the illustrated example, the terminal device 3 is constituted using a tablet.

As described above, the terminal device 3 includes the information acquisition section 30 that acquires information, the storage section 31 that stores information, the display section 32, and the display control section 33 (see also FIG. 3).

In the present embodiment, the information acquisition section 30 acquires at least the detection level information IL for the detectable objects 4 from the host control device 2. That is, the detection level information IL for the detectable objects 4 detected by the transport vehicle 1 is transmitted to the host control device 2 in the inspection mode. The detection level information IL is then transmitted from the host control device 2 to the terminal device 3.

The storage section 31 stores the map information Im showing a map of the movable area of the transport vehicle 1 as map data. The map data is stored in the storage section 31 in advance. Alternatively, the terminal device 3 may be configured to acquire the map data from a database held in the host control device 2 or a server (including a cloud server), and may store the acquired map data in the storage section 31.

In the present embodiment, the storage section 31 stores the position information Ip indicating the position of each of the detectable objects 4 on the map and the identification information I4 of each of the detectable objects 4 in association with each other as map data. For example, map data such as shown in FIG. 4 is stored in the storage section 31. Also, the storage section 31 stores the detection level information IL acquired by the information acquisition section 30.

The display section 32 displays information stored in the storage section 31. The display section 32 is controlled by the display control section 33 and displays information designated by the display control section 33.

The display control section 33 controls the display section 32. In the present embodiment, the display control section 33 displays a map of the movable area of the transport vehicle 1 on the display section 32, and displays the detection level information IL of the detectable objects 4 at the respective positions of the detectable objects 4 on the map. Additionally, the display control section 33 displays the identification information I4 and the position information Ip for each of the detectable objects 4 on the display section 32. In the example shown in FIG. 8, the identification information I4 and the position information Ip for each detectable object 4 are omitted for convenience of description.

As shown in FIG. 8, in the present embodiment, the display control section 33 displays the detection level information IL in different modes, according to the stage of the detection level for each detectable object 4. As described above, in the present embodiment, the detection level is divided into three stages: high level, medium level, and low level. In the example in FIG. 8, the detection level information IL indicating the high detection level is shown with a white circle. The detection level information IL indicating the medium detection level is shown in a hatched circle. The detection level information IL indicating the low- detection level is shown with a finely hatched circle. With such a configuration, the worker operating the terminal device 3 is easily able to recognize the condition of each of the detectable objects 4 installed on the travel surface F by checking the display section 32.

Note that the detection level information IL may be displayed on the display section 32 in a different mode from the above. For example, according to the stage of the detection level, the detection level information IL may be displayed in different colors from each other such as "green", "yellow", "red", and the like, or with different symbols from each other such as "○", "△", "×" and the like, or with different characters from each other such as "good", "caution", "defective", and the like. These displays may be performed by the worker operating the terminal device 3, or may be performed automatically by the display control section 33.

According to the article transport facility 100 described above, the detection level information IL for the detectable objects 4 can be acquired in the inspection mode. Thus, it is easier to take measures, such as replacing or repairing the detectable objects 4, before the detectable objects 4 deteriorate and become unsuitable for use. Accordingly, maintenance of an environment in which a transport vehicle 1 can travel appropriately is facilitated.

### Other Embodiments

Next, other embodiments will be described.
(1) The above embodiment describes an example in which the detectable objects 4 are each provided with the plurality of marks 4a each of which is constituted using a two-dimensional code. However, the present disclosure is not limited to such an example, and the marks 4a of the detectable objects 4 may be characters or symbols represented in a mode identifiable by the detection section 13. Alternatively, the detectable objects 4 may each be provided with an IC tag. The detection section 13 is configured in correspondence with the configuration of the detectable objects 4 to be detected.
(2) The above embodiment describes an example in which the detection level of the detectable object 4 by the detection section 13 is an index that represents the number of marks 4a detected by the detection section 13 as a percentage of all of the marks 4a belonging to the mark group 4G provided in one detectable object 4. However, the present disclosure is not limited to such an example, and, in the case where the detectable object 4 is constituted using an IC tag, the detection level may be an index representing radio wave strength.
(3) The above embodiment describes an example in which the display control section 33 displays a map of the movable area of the transport vehicle 1 on the display section 32, and displays the detection level information IL of the detectable objects 4 at the respective positions of the detectable objects 4 on the map. However, the present disclosure is not limited to such an example, and the display control section 33 may, for example, display the relationship between each detectable object 4 and the detection level information IL thereof on the display section 32 in graph form.
(4) The above embodiment describes and example in which the transport vehicle 1 is constituted as a floor transport vehicle that travel on a floor surface. However, the present invention is not limited to such an example, and the transport vehicle 1 may be constituted as a tracked transport vehicle that travels on a rail. In the case where the rail is installed in the vicinity of the ceiling, the transport vehicle 1 is constituted as a so-called overhead transport vehicle. In these cases, a plurality of detectable objects 4 are installed at intervals along the rail, and the transport vehicle 1 sequentially detects the detectable objects 4 while traveling along the rail.
(5) The above embodiment describes an example in which the management device Ct includes the host control device 2 and the terminal device 3 constituted by separate devices. However, the present disclosure is not limited to such an example, the management device Ct need not include the terminal device 3. In this case, the terminal device 3 and the host control device 2 included in the management device Ct may be constituted as an integrated device. For example, the terminal device 3 is constituted as a personal computer, a monitor, or the like connected to the host control device 2 by a cable.
(6) Note that the configuration disclosed in the above-described embodiments can also be applied in combination with configurations disclosed in other embodiments, as long as there are no inconsistencies. The embodiments disclosed herein, including other configurations thereof, are considered in all respects as illustrative. Accordingly, various modifications can be made as appropriate without departing from the gist of the present disclosure.

### Summary of Embodiment

The following is a summary of the present embodiment.

An article transport facility including:
a transport vehicle configured to transport an article;
a management device communicably connected to the transport vehicle and configured to control the transport vehicle; and
a plurality of detectable objects each provided with unique identification information,
the transport vehicle:
   (i) being configured to travel along a movement route set by linking together a plurality of the detectable objects,
   (ii) including:
      a vehicle-side control section configured to perform operation control of each section included in the transport vehicle; and
      a detection section configured to detect the detectable objects,
   (iii) being configured to sequentially detect the detectable objects with use of the detection section while moving along the movement route,
the management device being configured to selectively cause the vehicle-side control section to execute a normal mode and an inspection mode,
the vehicle-side control section being configured to:
   in the normal mode, every time one of the detectable objects is detected by the detection section, transmit, to the management device, (i) the identification information of the detectable object detected by the detection section and (ii) positional relationship information indicating a relative positional relationship between the detectable object and a reference position of the transport vehicle at a time that the identification information is detected by the detection section, and
   in the inspection mode, every time one of the detectable objects is detected by the detection section, transmit, to the management device, (i) the identification information of the detectable object detected by the detection section and (ii) detection level information indicating a detection level of the detectable object by the detection section.

According to this configuration, in the normal mode, the management device is able to grasp the identification information and the positional relationship information for each of the detectable objects constituting the movement route of the transport vehicle, thus facilitating optimization of control of the transport vehicle. Also, in the inspection mode, the management device is able to acquire detection level information for each detectable object, in addition to the identification information. If the detection level indicated by the detection level information is high, the detectable object can be determined to be in good condition. On the other hand, if the detection level indicated by the detection level information is low, it can be assumed that there is a high necessity to replace or repair the detectable object. Thus, it is easier to take measures, such as replacing or repairing the detectable object, before the detectable object deteriorates and becomes unsuitable for use. As described above, according to this configuration, maintenance of an environment in which a transport vehicle can travel appropriately is facilitated.

Preferably, the detection section includes an image capturing section configured to capture images of the detectable objects, and
the detection section is configured to acquire the identification information, the positional relationship information, and the detection level information, based on a result of recognition of the images of the detectable objects captured by the image capturing section.

According to this configuration, it is relatively easy to acquire identification information, positional relationship information, and detection level information, using the image capturing section.

Preferably, the transport vehicle is configured to travel on a travel surface extending in an X direction, which is a predetermined direction, and a Y direction orthogonal to the X direction,
the detectable objects are distributed at a plurality of locations on the travel surface,
the movement route is set by selecting an unspecified number of detectable objects from the plurality of detectable objects and linking together the selected detectable objects, and
the positional relationship information includes (i) a relative distance in each of the X direction and the Y direction between the detectable object and the reference position of the transport vehicle at the time that the identification information is detected, and (ii) a relative angle around a Z direction axis orthogonal to both the X direction and the Y direction between the transport vehicle and the detectable object at the time that the identification information is detected.

This configuration is readily favorably applied to an article transport facility that includes an unmanned transport vehicle capable of traveling along any route set on a travel surface.

Preferably, each one of the detectable objects has a mark group, which is a set of a plurality of marks,
the detection section is configured to detect an entirety of the mark group, and to separately detect each of the marks constituting the mark group, and
the detection level is an index representing the number of marks detected by the detection section as a percentage of all of the marks belonging to the mark group provided in the one detectable object.

According to this configuration, the detection level can be represented based on the number of marks that the detection section was able to detect. Thus, the detection level is readily appropriately defined.

Preferably, each of the marks is a two-dimensional code holding predetermined information, and
all of the marks belonging to the same mark group hold the same identification information as each other and hold different mark information from each other.

According to this configuration, all of the marks belonging to the same mark group hold the same identification information as each other, and, thus, the identification information of the detectable object can be acquired, if at least one of the marks belonging to the mark group provided in one detectable object is detected. Also, all of the marks belonging to the same mark group have different mark information from each other, and, thus, which of the plurality of marks was detected and which was not detected can be readily specified.

The management device includes:
an information acquisition section configured to acquire the detection level information for the plurality of detectable objects;
a storage section configured to store (i) map information showing a map of a movable area of the transport vehicle, (ii) position information showing a position of each of the detectable objects on the map, and (iii) the identification information of the detectable objects respectively in association with each other as map data;
a display section configured to display the information stored in the storage section; and
a display control section configured to control the display section, and
the display control section is configured to display the map on the display section and to display the detection level information of the detectable objects at respective positions of the detectable objects on the map.

According to this configuration, a worker is easily able to recognize the condition of each of the detectable objects installed on the travel surface by checking the display section of the terminal device.

### Industrial Applicability

The technology according to the present disclosure can be utilized in an article transport facility including a transport vehicle that transports articles, a management device that is communicably connected to the transport vehicle and controls the transport vehicle, and a plurality of detectable objects that is each provided with unique identification information.

### Description of Reference Signs

- 100: Article transport facility
- 1: Transport vehicle
- 13: Detection section
- 130: Image capturing section
- 14: Vehicle-side control section
- Ct: Management device
- 2: Host control device
- 3: Terminal device
- 30: Information acquisition section
- 31: Storage section
- 32: Display section
- 33: Display control section
- 4: Detectable object
- 4G: Mark group
- 4a: Mark
- 9: Article
- F: Travel surface
- R: Movement route
- C1: Reference position
- Dx: Relative distance
- Dy: Relative distance
- θ: Relative angle
- I4: Identification information
- I4a: Mark information
- IL: Detection level information
- Id: Positional relationship information
- Im: Map information
- Ip: Position information

## Claims

1. An article transport facility comprising:
a transport vehicle configured to transport an article;
a management device communicably connected to the transport vehicle and configured to control the transport vehicle; and
a plurality of detectable objects each provided with unique identification information,
the transport vehicle:
(i) being configured to travel along a movement route set by linking together a plurality of the detectable objects,
(ii) including:
a vehicle-side control section configured to perform operation control of each section included in the transport vehicle; and
a detection section configured to detect the detectable objects,
(iii) being configured to sequentially detect the detectable objects with use of the detection section while moving along the movement route,
the management device being configured to selectively cause the vehicle-side control section to execute a normal mode and an inspection mode,
the vehicle-side control section being configured to:
in the normal mode, every time one of the detectable objects is detected by the detection section, transmit, to the management device, (i) the identification information of the detectable object detected by the detection section and (ii) positional relationship information indicating a relative positional relationship between the detectable object and a reference position of the transport vehicle at a time that the identification information is detected by the detection section, and
in the inspection mode, every time one of the detectable objects is detected by the detection section, transmit, to the management device, (i) the identification information of the detectable object detected by the detection section and (ii) detection level information indicating a detection level of the detectable object by the detection section.

2. The article transport facility according to claim 1,
wherein the detection section includes an image capturing section configured to capture images of the detectable objects, and
the detection section is configured to acquire the identification information, the positional relationship information, and the detection level information, based on a result of recognition of the images of the detectable objects captured by the image capturing section.

3. The article transport facility according to claim 1,
wherein the transport vehicle is configured to travel on a travel surface extending in an X direction, which is a predetermined direction, and a Y direction orthogonal to the X direction,
the detectable objects are distributed at a plurality of locations on the travel surface,
the movement route is set by selecting an unspecified number of detectable objects from the plurality of detectable objects and linking together the selected detectable objects, and
the positional relationship information includes (i) a relative distance in each of the X direction and the Y direction between the detectable object and the reference position of the transport vehicle at the time that the identification information is detected, and (ii) a relative angle around a Z direction axis orthogonal to both the X direction and the Y direction between the transport vehicle and the detectable object at the time that the identification information is detected.

4. The article transport facility according to claim 1,
wherein each one of the detectable objects has a mark group, which is a set of a plurality of marks,
the detection section is configured to detect an entirety of the mark group, and to separately detect each of the marks constituting the mark group, and
the detection level is an index representing the number of marks detected by the detection section as a percentage of all of the marks belonging to the mark group provided in the one detectable object.

5. The article transport facility according to claim 4,
wherein each of the marks is a two-dimensional code holding predetermined information, and
all of the marks belonging to the same mark group hold the same identification information as each other and hold different mark information from each other.

6. The article transport facility according to any one of claims 1 to 5,
wherein the management device includes:
an information acquisition section configured to acquire the detection level information for the plurality of detectable objects;
a storage section configured to store (i) map information showing a map of a movable area of the transport vehicle, (ii) position information showing a position of each of the detectable objects on the map, and (iii) the identification information of the detectable objects respectively in association with each other as map data;
a display section configured to display the information stored in the storage section; and
a display control section configured to control the display section, and
the display control section is configured to display the map on the display section and to display the detection level information of the detectable objects at respective positions of the detectable objects on the map.
